Europäisches Patentamt

(19) European Patent Office

Office européen des brevets

(11) Publication number: **0 166 375**
**A2**

(12) # EUROPEAN PATENT APPLICATION

(21) Application number: **85107609.1**

(22) Date of filing: **20.06.85**

(51) Int. Cl.⁴: **F 16 K 47/02**

(30) Priority: **28.06.84 DE 8419343 U**

(43) Date of publication of application: **02.01.86**
**Bulletin 86/1**

(84) Designated Contracting States: **DE FR GB IT NL**

(71) Applicant: **Brücken, Ferdi W., Küstriner Strasse 2, D-5063 Overath (DE)**

(72) Inventor: **Brücken, Ferdi W., Küstriner Strasse 2, D-5063 Overath (DE)**

(74) Representative: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

(54) **A fluid valve.**

(57) A valve assembly comprises for the purpose of noise reduction attenuator means comprised of portions of static mixer elements, preferably mounted on the valve member, and preferably divided into sections of decreasing resistance in fluid flow direction.

1016/E

## A   f l u i d   v a l v e

-----------------------------------------------------------

The present invention relates to fluid valves, and in particular a valve for fluid flow control comprising a housing including a valve seat and a rotatable valve member within said housing adapted to cooperate with said valve seat.

It is known that noise production of throttle valves may be attenuated by splitting or dividing the fluid flow into individual partial streams. This concept may be implemented by using layers of perforated plates or the like (cf. MITTEILUNGEN DER VGB 1956, pages 349-353).

It is an object of the present invention to provide a valve system in which this concept is implemented in a more simple yet very efficient manner.

According to the invention, noise attenuation is achieved by combining static mixer elements with the valve. This combination may comprise separate static mixer elements disposed downstream of the valve in the fluid flow path, or preferably, the static mixer is mounted at the rotatable valve member or forms itself the valve member.

Static mixer elements are known per se and are produced, inter alia, by the company Gebr. Sulzer AG in Winterthur, Switzerland. Static mixer elements, so far, have been used for other purposes, as signified by their name. In fact, they are mounted in fluid paths in order to homogenise a fluid flowing therethrough without an agitating element. Different types of static mixers are manufactured depending upon the particular purpose. A type found to be most useful in connection with the invention comprises folded sheets disposed in layers such that open intersecting channels are defined.

Thus, the invention may be briefly defined as the application of static mixer elements for pressure reduction in valve systems, in particular in throttle valves.

The drawings illustrate in a quite schematical representation embodiments of the invention.

Fig. 1 shows the principle of a valve system including pressure reduction means according to the invention,

Fig. 2 is a section view of a flap valve according to the invention,

Fig. 3 is a section view of a ball valve according to the invention,

Fig. 4 illustrates a modification of the ball valve of Fig. 3,

Fig. 5 is an end view of the valve member of the ball valve of Fig. 4, seen in direction of arrow "5", and

Fig. 6 shows similarly end view "6".

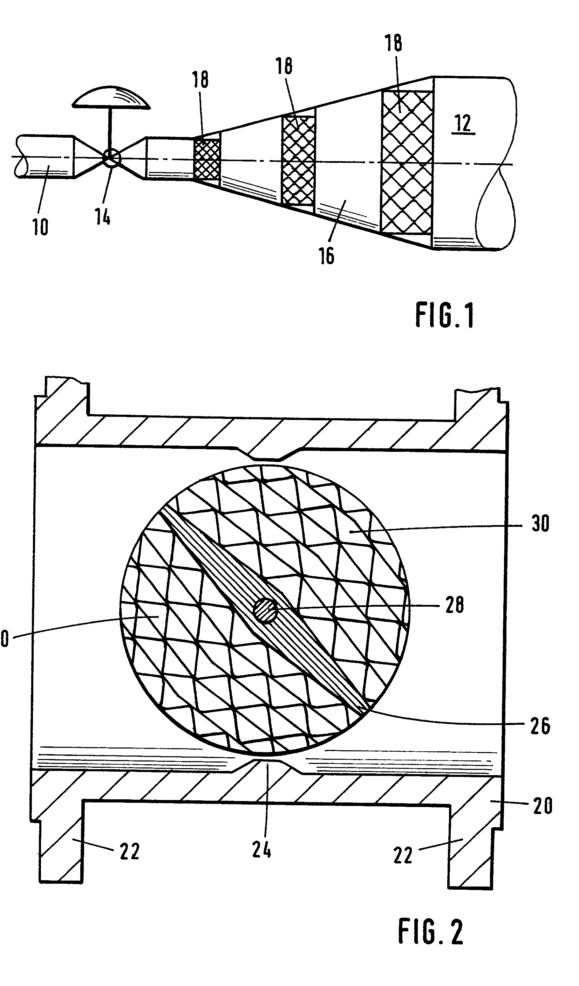

Fig. 1 illustrates a valve assembly comprising an inlet duct 10 feeding a fluid which, upon throttling, tends to expand. For this reason, outlet duct 12 has a respectively extended passage section. Throttling valve 14 may be of a design as illustrated in Fig. 2, 3 or 4 which will be explained later. In the truconical section 16 of the outlet duct which joins the valve outlet to the duct section 12, there are disposed three disc-shaped inserts made up as static mixer elements as defined above. They contribute to incrementally reduce the noise level. Each insert has a constant resistance while the resistances of succeeding insert, seen in flow direction, preferably decrease.

Fig. 2 shows schematically a flap valve in accordance with the invention. Housing 20 has joining flanges 22 for connecting the valve into a fluid carrying duct. Within the housing, there is a valve seat 24 adapted to cooperate with valve member 26 which is disposed in housing 20 rotatable about an axis 28. Valve member 26 is of the butterfly type and is illustrated in its partially open position. Static mixer element portions 30 are fastened at valve member 26 such that their passage channels extend substatially parallel to the main plane of valve member 26, i.e. the plane which, with the valve being closed, extends across the section of the housing in contact with valve seat 24.- The static mixer element portions 30 are contoured such that their contour coincides or mates, in each position of valve member 26, with the section of the valve seat. In case of a circular valve seat shape thus the static mixer element portions define a spherical shape of the entire assembly comprised of valve member 26 plus static mixer element portions 30.

It will be understood that with the design so far described, the flow passage section will be gradually opened with an increasing number of passage channels of the static mixer elements 30 upon rotation of the valve member 26 from its fully closed position into its fully opened position. The resulting characteristic of the valve is then of a very desirable form.

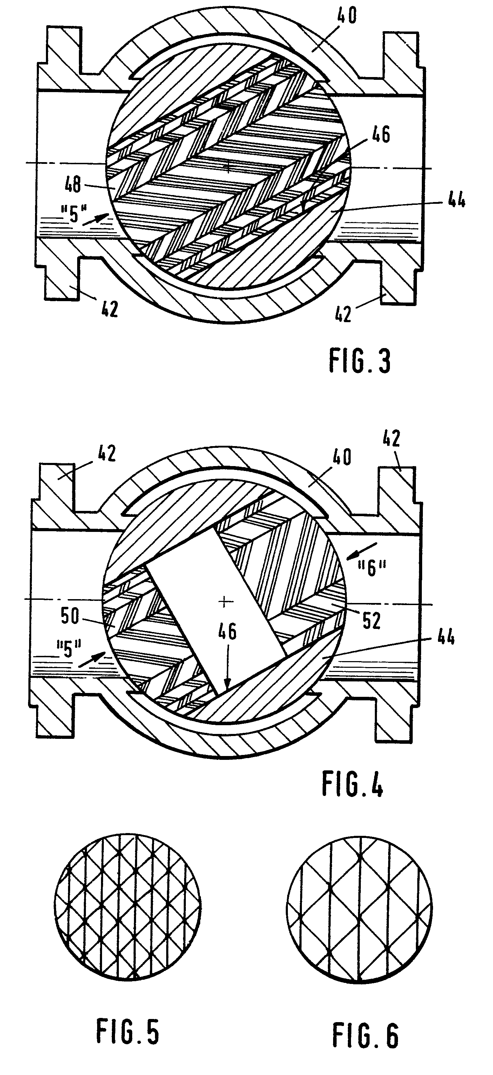

Fig. 3 illustrates a ball valve comprising a valve housing 40 with connecting flanges 42 and spherical valve member 44, traversed by a passage bore 46. Within the bore, an attenuator consisting of static mixer element layers 48 is disposed, the end view thereof being illustrated in Fig. 5. This end view applies also to the staic mixer element 50 as shown in Fig. 4; the design distinguishes over that of Fig. 3 in that the attenuator is divided into two portions 50, as mentioned above, and a second portion 52 of another resistance. If flow direction is assumed to be from the left-hand side of Fig. 4 to the right hand side, attenuator portion 52 will have a reduced resistance relative to portion 50, as may be clearly seen in Fig. 6. All the static mixer elements illustrated in Fig. 2 through 6 are comprised of layers of corrugated sheet material stacked such that intersecting passage channels are formed.

What I claim is:


1. A valve for fluid flow control, comprising a housing including a valve seat and a valve member mounted rotatably with respect to said housing, and means adapted to divide a fluid stream flowing through said valve into a plurality of partial streams, wherein said means comprises at least one static mixer element.


2. A valve as set forth in claim 1 wherein said at least one static mixer element is a part of said valve member.


3. A valve as set forth in claim 1 wherein said at least one static mixer element is mounted on said valve member.


4. A valve as set forth in claim 3 wherein said valve is a throttle valve and wherein said valve member is a flap valve member, said static mixer element having a main flow direction oriented parallel to a main face of said flap valve member.

5. A valve as set forth in claim 4 wherein said static mixer element is contoured to substantially fill a fluid passage defined by said valve seat in each possible operative position of said valve member.

6. A valve as set forth in claim 1 wherein said valve member is ball shaped and is comprised of static mixer elements.

7. A valve as set forth in claim 1 wherein static mixer elements of different characteristic are provided.

8. A fluid valve system, comprising a throttling valve and static mixer elements disposed downstream of said valve.

FIG.1

FIG. 2

FIG.3

FIG.4

FIG.5

FIG.6